(19) Europäisches Patentamt
European Patent Office
Office européen des brevets

(11) **EP 3 532 432 B1**

(12) **EUROPÄISCHE PATENTSCHRIFT**

(45) Veröffentlichungstag und Bekanntmachung des Hinweises auf die Patenterteilung:
**14.09.2022  Patentblatt 2022/37**

(21) Anmeldenummer: **16787817.2**

(22) Anmeldetag: **25.10.2016**

(51) Internationale Patentklassifikation (IPC):
**C01B 33/02** (2006.01)   **C09D 11/03** (2014.01)
**C30B 29/02** (2006.01)   **H01M 4/38** (2006.01)
**C09D 11/037** (2014.01)   **H01M 4/04** (2006.01)
**H01M 4/134** (2010.01)   **H01M 4/1395** (2010.01)
**H01M 4/36** (2006.01)

(52) Gemeinsame Patentklassifikation (CPC):
**C01B 33/02; C09D 11/037; H01M 4/0471;**
**H01M 4/134; H01M 4/1395; H01M 4/366;**
**H01M 4/386;** C01P 2004/61; Y02E 60/10

(86) Internationale Anmeldenummer:
**PCT/EP2016/075682**

(87) Internationale Veröffentlichungsnummer:
**WO 2018/077389 (03.05.2018 Gazette 2018/18)**

(54) **VERFAHREN ZUM MODIFIZIEREN VON SILIZIUMPARTIKELN**

METHOD FOR MODIFYING SILICON PARTICLES

PROCÉDÉ DE MODIFICATION DE PARTICULES DE SILICIUM

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**04.09.2019  Patentblatt 2019/36**

(73) Patentinhaber: **Wacker Chemie AG 81737 München (DE)**

(72) Erfinder:
• **JANTKE, Dominik**
  **84489 Burghausen (DE)**
• **BERNHARD, Rebecca**
  **84478 Waldraiburg (DE)**
• **GIGLER, Peter**
  **85221 Dachau (DE)**
• **STOHRER, Jürgen**
  **82049 Pullach (DE)**

(74) Vertreter: **Ege, Markus et al**
  **Wacker Chemie AG**
  **Hanns-Seidel-Platz 4**
  **81737 München (DE)**

(56) Entgegenhaltungen:
EP-A2- 1 102 340     WO-A1-2017/148872
JP-A- 2011 065 796

• **SHEPHERD M. TICHAPONDWA ET AL: "Suppressing Hydrogen Evolution by Aqueous Silicon Powder Dispersions by Controlled Silicon Surface Oxidation", PROPELLANTS, EXPLOSIVES, PYROTECHNICS.**, Bd. 38, Nr. 1, 1. Februar 2013 (2013-02-01), Seiten 48-55, XP055366351, DE ISSN: 0721-3115, DOI: 10.1002/prep.201100111
• **A. TOUIDJINE ET AL: "Partially Oxidized Silicon Particles for Stable Aqueous Slurries and Practical Large-Scale Making of Si-Based Electrodes", JOURNAL OF THE ELECTROCHEMICAL SOCIETY**, Bd. 162, Nr. 8, 12. Mai 2015 (2015-05-12), Seiten A1466-A1475, XP055366347, US ISSN: 0013-4651, DOI: 10.1149/2.0301508jes

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft Verfahren zum Modifizieren von nicht-aggregierten Siliziumpartikeln durch Behandlung mit einem Sauerstoff-haltigen Gas bei erhöhter Temperatur, so erhältliche nicht-aggregierte, modifizierte Siliziumpartikel sowie deren Verwendung zur Herstellung von wässrigen Tintenformulierungen und Anoden für Lithiumionen-Batterien.

Wiederaufladbare Lithiumionen-Batterien sind heute die praxistauglichen elektrochemischen Energiespeicher mit den höchsten gravimetrischen Energiedichten. Eine besonders hohe theoretische Materialkapazität weist Silizium (4200 mAh/g) auf und ist deswegen als Aktivmaterial für Anoden von Lithiumionen-Batterien besonders geeignet. Die Herstellung von Anoden erfolgt über Anodentinten, in denen die einzelnen Bestandteile des Anodenmaterials in einem Lösungsmittel dispergiert sind. Im industriellen Maßstab wird als Lösungsmittel für die Anodentinten aus ökonomischen und ökologischen Gründen zumeist Wasser eingesetzt. Die Oberfläche von Silizium ist jedoch gegenüber Wasser sehr reaktiv und wird bei Wasserkontakt oxidiert unter Bildung von Siliziumoxiden und Wasserstoff. Die Wasserstofffreisetzung führt in der Verarbeitung der Anodentinten zu erheblichen Schwierigkeiten. Beispielsweise können solche Tinten auf Grund eingeschlossener Gasblasen inhomogene Elektrodenbeschichtungen ergeben. Zudem macht die Wasserstoffbildung aufwändige sicherheitstechnische Schutzmaßnahmen erforderlich. Eine unerwünschte Oxidation von Silizium führt letztlich auch zur Verringerung des Siliziumanteils in der Anode, was die Kapazität der Lithiumionen-Batterie reduziert.

Lithiumionen-Batterien mit Siliziumpartikel enthaltenden Anodenmaterialien sind beispielsweise aus der EP1313158 bekannt. Die Siliziumpartikel der EP1313158 haben durchschnittliche Partikelgrößen von 100 bis 500 nm und wurden hergestellt durch Mahlung und anschließende oxidative Behandlung mit Sauerstoff-haltigen Gasen. Größere Partikelgrößen werden als nachteilig für die Coulomb-Effizienz entsprechender Batterien erachtet.

Für die oxidative Behandlung in Luft erwähnt die EP1313158 Temperaturen von 80 bis 450°C und in Inertgasen mit geringerem Sauerstoffgehalt Temperaturen von 80 bis 900°C. EP1313158 lehrt davon weg, für die oxidative Behandlung in Luft Temperaturen über 450°C zu wählen. Die EP1102340 überführt Siliziumpartikel mit durchschnittlichen Partikeldurchmessern $d_{50}$ von 10 µm mittels Mahlen in Gegenwart von Sauerstoff in Siliziumpartikel mit durchschnittlichen Partikeldurchmessern $d_{50}$ von 1 µm. Auch JP2011065796 beschreibt das Herstellen von Siliziumpartikeln mit durchschnittlichen Partikeldurchmessern $d_{50}$ von 5 bis 15 µm durch Mahlen von Silicium in Gegenwart von Sauerstoff. Die WO17148872 lehrt den Einsatz von nicht-aggregierten Siliciumpartikeln mit volumengewichteten Partikelgrößenverteilungen von 0,15 bis 7,0 µm und einer $SiO_2$-Schicht auf der Oberfläche als Anodenaktivmaterial für Lithiumbatterien.

Touidjine, im Journal of The Electrochemical Society, 2015, 162, Seiten A1466 bis A1475, befasst sich mit der Reduzierung der Wasserstoffbildung bei Kontakt von gemahlenen Siliziumpartikeln mit Wasser. Hierzu lehrt Touidjine, die Siliziumpartikel mittels Wasser oder an Luft bei erhöhter Temperatur teilweise zu oxidieren. Die zur Oxidation einge-setzten Siliziumpartikel haben einen $SiO_2$-Gehalt von 9 Gew.-% und nach Luftoxidation einen $SiO_2$-Gehalt von 11 Gew.-%, je bezogen auf das Gesamtgewicht der Siliziumpartikel. Die Siliziumpartikel von Touidjine haben durchschnittliche Partikelgrößen von 150 nm und liegen in Form von Aggregaten vor. Die zur Oxidation eingesetzten Siliziumpartikel haben eine spezifische Oberfläche BET von 14 m²/g, die im Zuge der Luftoxidation von Touidjine reduziert wird. Touidjine empfiehlt den Einsatz solcher partiell oxidierten Siliziumpartikel zur Herstellung von wässrigen Anodentinten für Anoden von Lithiumionen-Batterien.

Tichapondwa, in Propellants, Explosives, Pyrotechnics, 2013, 38, Seiten 48 bis 55, diskutiert wässrige Silizium-Dispersionen als Vorstufen für retardierte pyrotechnische Zünder. Zur Unterdrückung der Wasserstoffbildung und somit zur Erhöhung der Prozesssicherheit bei Kontakt der Siliziumpartikel mit Wasser empfiehlt Tichapondwa, die Oberfläche der Siliziumpartikel durch Oxidation bei erhöhter Temperatur an Luft mit einer Siliziumoxidschutzschicht zu versehen. Die der Oxidation unterzogenen Siliziumpartikel haben einen durchschnittlichen Partikeldurchmesser von 2,06 µm, eine BET-Oberfläche von 9,68 m²/g und sind bereits zu 13% oxidiert, bezogen auf das Silizium, und liegen aggregiert vor. Die oxidierten Siliziumpartikel von Tichapondwa sind weiterhin aggregiert, wie durch Laserstreuung mit und ohne Ultraschallbehandlung gezeigt wurde. Aus der Figur 1 des Artikels von Tichapondwa geht hervor, dass dessen oxidierte, aggregierte Siliziumpartikel in Wasser allerdings noch erhebliche Mengen an Wasserstoff freisetzen - und dies trotz der sehr hohen Oxidanteile.

Aus DE102015215415.7 (Anmeldenummer) ist bekannt, dass Silizium-Partikel mit einer volumengewichteten Partikelgrößenverteilung von $d_{10} \geq 0,2$ µm und $d_{90} \leq 20,0$ µm sowie eine Breite $d_{90}$-$d_{10} \leq 15$ µm, als Anodenmaterialien verwendet werden können.

Vor diesem Hintergrund bestand die Aufgabe für die vorliegende Erfindung, Siliziumpartikel bereitzustellen, die bei Einsatz in wässrigen Tintenformulierungen zur Herstellung von Anoden für Lithiumionen-Batterien zu keiner oder einer möglichst geringen Wasserstoffbildung führen, insbesondere kein Aufschäumen von wässrigen Tintenformulierungen oder keine schlechte Pumpbarkeit der Tinten bewirken, und zudem das vorteilhafte Einbringen möglichst hoher Siliziumanteile in die Anoden ermöglichen sowie möglichst homogene Anodenbeschichtungen ergeben sollen.

Ein Gegenstand der Erfindung sind Verfahren zur Herstellung von nicht-aggregierten, modifizierten Siliziumpartikeln, indem nicht-aggregierte Siliziumpartikel, die volumengewichtete Partikelgrößenverteilungen mit Durchmesser-

Perzentilen $d_{50}$ von 3,0 bis 7,0 μm aufweisen, bei 80°C bis 900°C mit einem Sauerstoff-haltigen Gas behandelt werden, mit der Maßgabe, dass der Sauerstoffgehalt der nicht-aggregierten, modifizierten Siliziumpartikel um 0,05 bis 0,6 Gew.-% größer ist als der Sauerstoffgehalt der als Edukt eingesetzten nicht-aggregierten Siliziumpartikel, je bezogen auf das Gesamtgewicht der Siliziumpartikel.

Ein weiterer Gegenstand der Erfindung sind nicht-aggregierte, modifizierte Siliziumpartikel erhältlich nach dem erfindungsgemäßen Verfahren.

Auf Grund ihrer erfindungsgemäßen Herstellung unterscheiden sich die nicht-aggregierten, modifizierten Siliziumpartikel strukturell von den als Edukt eingesetzten Siliziumpartikeln.

Dies äußert sich beispielsweise daran, dass die nicht-aggregierten, modifizierten Siliziumpartikel in Wasser bei Raumtemperatur im Allgemeinen keine oder eine im Vergleich zu den als Edukt für dieses Verfahren eingesetzten Siliziumpartikeln eine zumindest weitaus geringere Wasserstoffentwicklung zeigen und daher eine Verarbeitung in wässrigen Tintenformulierungen ohne ein Aufschäumen und eine homogene Beschichtung zur Herstellung von Anoden für Lithiumionen-Batterien möglich ist.

Ein weiterer Gegenstand der Erfindung ist daher die Verwendung der erfindungsgemäßen Verfahrensprodukte zur Herstellung von wässrigen Tintenformulierungen.

Ein weiterer Gegenstand der Erfindung sind Verfahren zur Herstellung von wässrigen Tintenformulierungen, dadurch gekennzeichnet, dass erfindungsgemäße Verfahrensprodukte und ein oder mehrere Bindemittel mit Wasser gemischt werden.

Ein weiterer Gegenstand der Erfindung ist die Verwendung der erfindungsgemäßen Verfahrensprodukte zur Herstellung von Anoden für Lithiumionen-Batterien.

Im Folgenden werden die im erfindungsgemäßen Verfahren eingesetzten nicht-aggregierten Siliziumpartikel auch abgekürzt als Edukt-Si-Partikel bezeichnet. Die erfindungsgemäß hergestellten nicht-aggregierten, modifizierten Siliziumpartikel werden abgekürzt auch als modifizierte Siliziumpartikel bezeichnet.

Das Sauerstoff-haltige Gas enthält vorzugsweise 1 bis 100 Vol.-%, besonders bevorzugt 1 bis 50 Vol.-%, mehr bevorzugt 5 bis 35 Vol.-%, noch mehr bevorzugt 10 bis 30 Vol.-% und am meisten bevorzugt 15 bis 25 Vol.-% Sauerstoff, bezogen auf das Gesamtvolumen des Sauerstoff-haltigen Gases.

Weitere Bestandteile des Sauerstoff-haltigen Gases können beispielsweise Stickstoff, oder Edelgase, wie Argon, sein.

Als Sauerstoff-haltiges Gas ist Luft bevorzugt.

Überraschenderweise führt die Behandlung mit Luft bei erhöhten Temperaturen nicht zu einer unkontrollierbaren Reaktion der Siliziumpartikel mit dem Sauerstoff, sondern führt zu den bevorzugten Oxidgehalten. Nach Stand der Technik führt die Behandlung von Si-Partikeln an Partikeln von 500 nm zu einem Oxidgehalt von etwa 17 Gew.-%, was einer Schichtdicke von 30 nm, wohingegen im erfindungsgemäßen Verfahren bei ansonsten gleicher Partikelbehandlung überraschenderweise weitaus geringere Schichtdicken erreicht werden können. Die Behandlung mit Luft führt jedoch überraschenderweise, im Gegensatz zu Tichapondwa, auch bei geringen Sauerstoffgehalten der modifizierten Siliziumpartikeln zu einer hinreichenden Unterdrückung der Wasserstofffreisetzung in wässrigen Dispersionen sowie wässrigen Tintenformulierungen.

Die Sauerstoff-haltigen Gase können sonstige reaktive Gase enthalten. Beispiele für reaktive Gase sind Wasser oder Alkohole, wie Methanol oder Ethanol, in gasförmigem Zustand. Sonstige reaktive Gase sind zu vorzugsweise ≤ 3 Vol.-%, mehr bevorzugt ≤ 1 Vol.-% und besonders bevorzugt ≤ 0,1 Vol.-% enthalten, bezogen auf das Gesamtvolumen des Sauerstoff-haltigen Gases. Am meisten bevorzugt sind keine reaktiven Gase enthalten.

Die Temperatur zur Behandlung der Edukt-Si-Partikel mit einem Sauerstoff-haltigen Gas beträgt vorzugsweise ≥ 100°C, besonders bevorzugt ≥ 120°C und am meisten bevorzugt ≥ 150°C. Die vorgenannte Temperatur ist vorzugsweise ≤ 800°C, besonders bevorzugt ≤ 700°C und am meisten bevorzugt ≤ 650°C.

Bevorzugte Temperaturbereiche zur Behandlung der Edukt-Si-Partikel mit einem Sauerstoff-haltigen Gas sind 80°C bis 400°C, besonders bevorzugt 120°C bis 300°C und am meisten bevorzugt 150°C bis 250°C.

Bevorzugte Temperaturbereiche zur Behandlung der Edukt-Si-Partikel mit einem Sauerstoff-haltigen Gas sind auch 250°C bis 900°C, besonders bevorzugt 400°C bis 800°C und am meisten bevorzugt 500°C bis 700°C.

Die Dauer der Behandlung der Edukt-Si-Partikel mit einem Sauerstoff-haltigen Gas hängt stark von der gewählten Temperatur und dem gewünschten Oxidationsgrad ab und kann von einem Fachmann einfach an Hand weniger orientierender Versuche entsprechend angepasst werden. Die Dauer kann beispielsweise 0,1 Minuten bis 24 Stunden, vorzugsweise 10 Minuten bis 15 Stunden, besonders bevorzugt 0,5 bis 10 Stunden und am meisten bevorzugt 1 bis 6 Stunden betragen. Bei einer Temperatur von 500°C bis 700°C dauert die Behandlung vorzugsweise 1 bis 15 Stunden und besonders bevorzugt 3 bis 10 Stunden.

Der Druck beträgt vorzugsweise 0,5 bis 2 bar, besonders bevorzugt 0,8 bis 1,5 bar und noch mehr bevorzugt 1 atm. Am meisten bevorzugt wird bei Umgebungsdruck gearbeitet.

Das Verfahren kann in herkömmlichen Reaktoren erfolgen, wie beispielsweise in einem Rohrofen, Drehrohrofen, Wirbelschichtreaktor, oder einem Fließbettreaktor stattfinden. Besonders bevorzugt sind Kalzinieröfen und Drehrohröfen. Das Verfahren kann kontinuierlich oder diskontinuierlich betrieben werden.

Das Verfahren wird vorzugsweise in Abwesenheit von Flüssigkeiten, wie Lösungsmitteln, insbesondere in Abwesenheit von Wasser oder Alkoholen in flüssiger Form, durchgeführt.

Die volumengewichtete Partikelgrößenverteilung der Edukt-Si-Partikel weist Durchmesser-Perzentile $d_{50}$ von vorzugsweise 3,0 bis 6,0 μm auf.

Die volumengewichtete Partikelgrößenverteilung der Edukt-Si-Partikel weist Durchmesser-Perzentile $d_{10}$ von vorzugsweise 0,5 μm bis 10 μm, besonders bevorzugt 0,5 μm bis 5,0 μm und am meisten bevorzugt 0,5 μm bis 3,0 μm auf.

Die volumengewichtete Partikelgrößenverteilung der Edukt-Si-Partikel weist Durchmesser-Perzentile $d_{90}$ von vorzugsweise μm 2,0 bis 20,0 μm, besonders bevorzugt 3,0 bis 15,0 μm und am meisten bevorzugt 5,0 μm bis 10,0 μm auf.

Die volumengewichtete Partikelgrößenverteilung der Edukt-Si-Partikel hat eine Breite $d_{90}$-$d_{10}$ von vorzugsweise ≤ 20,0 μm, mehr bevorzugt ≤ 15,0 μm, noch mehr bevorzugt ≤ 12,0 μm, besonders bevorzugt ≤ 10,0 μm und am meisten bevorzugt ≤ 7,0 μm.

Die volumengewichtete Partikelgrößenverteilung der Edukt-Si-Partikel ist bestimmbar durch statische Laserstreuung unter Anwendung des Mie-Modells mit dem Messgerät Horiba LA 950 mit Alkoholen, wie beispielsweise Ethanol oder Isopropanol, oder vorzugsweise Wasser als Dispergiermedium für die Siliziumpartikel.

Die Edukt-Si-Partikel sind nicht aggregiert, vorzugsweise nicht agglomeriert.

Aggregiert bedeutet, dass sphärische oder weitestgehend sphärische Primärpartikel, wie sie beispielsweise zunächst in Gasphasenprozessen bei der Herstellung der Edukt-Si-Partikel gebildet werden, zu Aggregaten zusammengewachsen sind. Die Aggregierung von Primärpartikeln kann beispielsweise während der Herstellung der Silizium-partikel in Gasphasenprozessen oder beispielsweise während der Oxidation der Edukt-Si-Partikel auftreten. Solche Aggregate können im weiteren Reaktionsverlauf Agglomerate bilden. Agglomerate sind eine lose Zusammenballung von Aggregaten. Agglomerate können mit typischerweise eingesetzten Knet- und Dispergierverfahren leicht wieder in die Aggregate aufgespalten werden. Aggregate lassen sich mit diesen Verfahren nicht oder nur in geringem Umfang in die Primärpartikel zerlegen. Aggregate und Agglomerate haben auf Grund ihrer Entstehung zwangsläufig ganz andere Sphärizitäten und Kornformen als die bevorzugten Siliziumpartikel. Das Vorliegen von Siliziumpartikeln in Form von Aggregaten oder Agglomeraten kann beispielsweise mittels herkömmlicher Raster-Elektronen-Mikroskopie (REM) sichtbar gemacht werden. Statische Lichtstreuungsmethoden zur Bestimmung der Teilchengrößenverteilungen oder Partikeldurchmessern von Siliziumpartikeln können dagegen nicht zwischen Aggregaten oder Agglomeraten unterscheiden.

Die BET-Oberflächen der Edukt-Si-Partikel betragen vorzugsweise 0,2 bis 8,0 m$^2$/g, besonders bevorzugt 0,5 bis 5,0 m$^2$/g und am meisten bevorzugt 1,0 bis 5,0 m$^2$/g. Die BET-Oberfläche wird gemäß DIN 66131 (mit Stickstoff) bestimmt.

Die Edukt-Si-Partikel haben eine Sphärizität von vorzugsweise 0,3 ≤ ψ ≤ 0,9, besonders bevorzugt 0,5 ≤ ψ ≤ 0,85 und am meisten bevorzugt 0,65 ≤ ψ ≤ 0,85. Edukt-Si-Partikel mit solchen Sphärizitäten sind insbesondere durch Herstellung mittels Mahlprozessen zugänglich. Die Sphärizität ψ ist das Verhältnis aus der Oberfläche einer Kugel gleichen Volumens zur tatsächlichen Oberfläche eines Körpers (Definition von Wadell). Sphärizitäten können beispielsweise aus herkömmlichen REM-Aufnahmen ermittelt werden.

Die Edukt-Si-Partikel basieren vorzugsweise auf elementarem Silizium. Unter elementarem Silizium ist hochreines, polykristallines Silizium, mit geringem Anteil an Fremdatomen (wie beispielsweise B, P, As), gezielt mit Fremdatomen dotiertes Silizium (wie beispielsweise B, P, As), aber auch Silizium aus metallurgischer Verarbeitung, welches elementare Verunreinigung (wie beispielsweise Fe, Al, Ca, Cu, Zr, Sn, Co, Ni, Cr, Ti, C) aufweisen kann, zu verstehen.

Besonders bevorzugt sind Edukt-Si-Partikel die im Inneren ≥ 80 Mol-% Silizium und/oder ≤ 20 Mol-% Fremdatome, ganz besonders bevorzugt ≤ 10 Mol-% Fremdatome enthalten.

Die Edukt-Si-Partikel können bereits auch Siliziumoxid enthalten. Etwaiges Siliziumoxid befindet sich vorzugsweise an der Oberfläche der Edukt-Si-Partikel. Eine Oxidschicht kann die Oberfläche der Edukt-Si-Partikel vollständig oder teilweise bedecken. Solche Oxidschichten können beispielsweise entstehen bei der Herstellung der Edukt-Si-Partikel und/oder bei Temperaturen unter 80°C, insbesondere unter 50°C oder unter 30°C und besonders bevorzugt bei Raumtemperatur, am meisten bevorzugt an Luft. Solche Oxidschichten können beispielweise während des Lagerns der Edukt-Si-Partikel gebildet werden. Solche Oxidschichten werden auch als native Oxidschichten bezeichnet. Solche nativen Oxidschichten sind im Allgemeinen nicht geeignet zur Lösung der erfindungsgemäßen Aufgabe. Zudem ist eine Ablagerung der Si-Partikel über längere Zeiträume im technischen bzw. industriellen Maßstab nicht erwünscht. Bevorzugt haben die Edukt-Si-Partikel keine Oxidschicht, wie sie beispielsweise durch längeres Ablagern an Luft gebildet wird.

Die Edukt-Si-Partikel enthalten vorzugsweise ≤ 5,0 Gew.-%, besonders bevorzugt ≤ 2,0 Gew.-%, noch mehr bevorzugt ≤ 1,0 Gew.-% und am meisten bevorzugt ≤ 0,5 Gew.-% Sauerstoff, bezogen auf das Gesamtgewicht der Edukt-Si-Partikel.

Die Edukt-Si-Partikel können beispielsweise durch Mahlprozesse hergestellt werden. Die geläufige Gasphasenabscheidung ist dagegen im Allgemeinen ungeeignet zur Herstellung erfindungsgemäß ausgestalteter Siliziumpartikel.

Durch Mahlprozesse sind Edukt-Si-Partikel mit den erfindungsgemäßen Eigenschaften zugänglich, beispielsweise mit vorteilhaften Sphärizitäten, wie den in der Anwendung vorteilhaften Bruchflächen, insbesondere scharfkantigen Bruchflächen, oder beispielsweise splitterförmige Siliziumpartikel. Auch die erfindungsgemäßen Partikelgrößenverteilungen der Edukt-Si-Partikel und nicht-aggregierte Edukt-Si-Partikel sind durch Mahlprozesse sehr gut zugänglich.

Durch Gasphasenprozesse hergestellte Siliziumpartikel haben dagegen im Allgemeinen eine runde oder nadelförmige Gestalt. Bei der Gasphasenabscheidung kommt es typischerweise zur Aggregation der Partikel. Um nicht-aggregierte Siliziumpartikel mittels Gasphasenprozessen herzustellen, müssten die Gasphasenreaktoren mit extrem niedrigen Gaskonzentrationen oder extrem kurzen Reaktorverweilzeiten betrieben werden, was aber die Bildung von Siliziumpartikeln mit der erfindungsgemäßen μ-skaligen Partikelgröße konterkariert und zu technisch unrentablen Produktionszeiten führt. Wenn dagegen aggregierte Siliziumpartikel akzeptabel sind, sind Gasphasenprozesse bestens geeignet für die Herstellung μ-skaliger Si-Aggregate mit Primärpartikelgröße im Nanometerbereich.

Als Mahlprozesse kommen beispielsweise Nass- oder insbesondere Trocken-Mahlprozesse in Betracht. Hierbei werden vorzugsweise Planetenkugelmühlen, Strahlmühlen, wie Gegenstrahl oder Prallmühlen, oder Rührwerkskugelmühlen eingesetzt. Bevorzugt werden Trocken-Mahlprozesse eingesetzt, insbesondere bevorzugt in einer Strahlmühle.

Die Vermahlung in der Strahlmühle erfolgt bevorzugt mit Stickstoff oder Edelgasen, wie bevorzugt Argon, als Mahlgas. Die Strahlmühlen weisen bevorzugt einen integrierten Windsichter auf, der statisch oder dynamisch ausgebildet sein kann, oder sie werden im Kreislauf mit einem externen Windsichter betrieben.

Im erfindungsgemäßen Verfahren zur Herstellung der modifizierten Siliziumpartikel werden Edukt-Si-Partikel vorzugsweise in nativer Form eingesetzt. Die nach den vorgenannten Verfahren herstellten Edukt-Si-Partikel werden vorzugsweise unmittelbar und/oder ohne weitere Umsetzung, insbesondere ohne vorherige Oxidation, im erfindungsgemäßen Verfahren zur Herstellung der modifizierten Siliziumpartikel eingesetzt.

Durch erfindungsgemäße Behandlung mit Sauerstoff-haltigem Gas werden die Edukt-Si-Partikel allgemein teilweise oxidiert. Dies bedeutet, dass ein Teil des Siliziums der Edukt-Si-Partikel üblicherweise in Siliziumoxid überführt wird. Das Edukt-Si-Partikel wird vorzugsweise an der Oberfläche oxidiert. Es entsteht also vorzugsweise an der Oberfläche der Edukt-Si-Partikel eine Oxidschicht, insbesondere eine Siliziumoxidschicht. Die Oxidschicht kann die Oberfläche der modifizierten Siliziumpartikel teilweise oder vorzugsweise vollständig umschließen.

Der Sauerstoffgehalt der modifizierten Siliziumpartikel ist um vorzugsweise 0,15 bis 0,6 Gew.-% größer als der Sauerstoffgehalt der Edukt-Si-Partikel, je bezogen auf das Gesamtgewicht der Siliziumpartikel. Dies bezeichnet die Differenz aus dem Sauerstoffgehalt der modifizierten Siliziumpartikel, bezogen auf das Gesamtgewicht der modifizierten Siliziumpartikel, und dem Sauerstoffgehalt der Edukt-Si-Partikel, bezogen auf das Gesamtgewicht der Edukt-Si-Partikel.

Die modifizierten Siliziumpartikel enthalten vorzugsweise 0,1 bis 8,0 Gew.-%, besonders bevorzugt 0,12 bis 6,0 Gew.-%, mehr bevorzugt 0,15 bis 3,0 Gew.-% und am meisten bevorzugt 0,2 bis 1,5 Gew.-% Sauerstoff, bezogen auf das Gesamtgewicht der modifizierten Siliziumpartikel.

Die mittlere Siliziumoxid-Schichtdicke an der Oberfläche der modifizierten Siliziumpartikel hat eine Dicke von vorzugsweise 2 bis 50 nm, besonders bevorzugt 3 bis 30 nm und am meisten bevorzugt 3 bis 25 nm (bestimmt wie weiter unten unter der Überschrift "Bestimmung der mittleren Siliziumoxid-Schichtdicke $d(SiO_2)$" angegeben) .

Weitere Eigenschaften oder Parameter, insbesondere die volumengewichteten Partikelgrößenverteilungen $d_{50}$, $d_{10}$, $d_{90}$ und die Breite $d_{90}$-$d_{10}$, die Sphärizitäten oder die BET-Oberflächen, der modifizierten Siliziumpartikel entsprechen vorzugsweise den Angaben, die weiter oben für die Edukt-Si-Partikel getroffen sind. Dies trifft auch auf die Angaben zu den nicht-aggregierten Partikeln und, abgesehen vom Sauerstoff-Gehalt, auf die chemische Zusammensetzung der modifizierten Siliziumpartikel zu.

Die Tintenformulierungen basieren vorzugsweise auf einer Mischung umfassend erfindungsgemäß hergestellte modifizierte Siliziumpartikel, ein oder mehrere Bindemittel, gegebenenfalls Graphit, gegebenenfalls ein oder mehrere weitere elektrisch leitende Komponenten und gegebenenfalls ein oder mehrere Additive.

Bevorzugte Bindemittel sind Polyacrylsäure oder deren Alkali-, insbesondere Lithium- oder Natrium-Salze, Polyvinylalkohole, Cellulose oder Cellulosederivate, Polyvinylidenfluorid, Polytetrafluorethylen, Polyolefine, Polyimide, insbesondere Polyamidimide, oder thermoplastische Elastomere, insbesondere Ethylen-Propylen-Dien-Terpolymere. Besonders bevorzugt sind Polyacrylsäure, Polymethacrylsäure oder Cellulose-Derivate, insbesondere Polyacrylsäure oder deren Lithium oder Natrium-Salze.

Als Graphit kann allgemein natürlicher oder synthetischer Graphit eingesetzt werden. Die Graphitpartikel haben bevorzugt eine volumengewichtete Partikelgrößenverteilung zwischen den Durchmesser-Perzentilen $d_{10}$ > 0,2 μm und $d_{90}$ < 200 μm.

Bevorzugte weitere elektrisch leitende Komponenten sind Leitruß, Kohlenstoff-Nanoröhrchen oder metallische Partikel, beispielsweise Kupfer.

Beispiele für Additive sine Porenbildner, Dispergiermittel, Verlaufsmittels oder Dotiermittel, beispielsweise elementares Lithium.

Bevorzugte Rezepturen für die Tintenformulierungen der Lithiumionen-Batterien enthalten vorzugsweise 5 bis 95 Gew.-%, insbesondere 60 bis 85 Gew.-% erfindungsgemäß hergestellte modifizierte Siliziumpartikel; 0 bis 40 Gew.-

%, insbesondere 0 bis 20 Gew.-% weitere elektrisch leitende Komponenten; 0 bis 80 Gew.-%, insbesondere 5 bis 30 Gew.-% Graphit; 0 bis 25 Gew.-%, insbesondere 5 bis 15 Gew.-% Bindemittel; und gegebenenfalls 0 bis 80 Gew.-%, insbesondere 0,1 bis 5 Gew.-% Additive; wobei sich die Angaben in Gew.-% auf das Gesamtgewicht der Tintenformulierung beziehen und sich die Anteile aller Bestandteile der Tintenformulierung auf 100 Gew.-% aufsummieren.

Die Verarbeitung der Bestandteile der Tintenformulierung zu einer Anodentinte bzw. -paste erfolgt vorzugsweise in Wasser oder in einem wässrigen Lösungsmittel. Ein wässriges Lösungsmittel enthält allgemein Wasser und ein oder mehrere organische Lösungsmittel. Beispiele für organische Lösungsmittel sind Tetrahydrofuran, N-Methylpyrrolidon, N-Ethylpyrrolidon, Aceton, Dimethylsulfoxid, Dimethylacetamid oder Ethanol. Der Anteil der organischen Lösungsmittel ist vorzugsweise $\leq$ 50 Vol.-%, mehr bevorzugt $\leq$ 20 Vol.-% und besonders bevorzugt $\leq$ 10 Vol.-%, bezogen auf das Gesamtvolumen der wässrigen Lösungsmittel. Am meisten bevorzugt enthält das Wasser kein organisches Lösungsmittel.

Zur Herstellung der Tintenformulierungen können herkömmliche Vorrichtungen Einsatz finden, wie beispielsweise Rotor-Stator-Maschinen, Dissolvermischer, Hochenergiemühlen, Planetenmischern, Knetern, Rührwerkskugelmühlen, Rüttelplatten oder Ultraschallgeräten.

Die Tintenformulierungen weisen einen pH-Wert auf von vorzugsweise 2 bis 9, besonders bevorzugt 5 bis 8 und am meisten bevorzugt 6,5 bis 7,5 (bestimmt bei 20°C, beispielsweise mit dem pH-Meter von WTW pH 340i mit Sonde SenTix RJD).

Zur Herstellung einer Anode für Lithiumionen-Batterien kann die Tintenformulierung beispielsweise auf eine Kupferfolie oder einen anderen Stromsammler aufgerakelt werden. Andere Beschichtungsverfahren, wie z.B. Rotationsbeschichtung (Spin-Coating), Rollen-, Tauch- oder Schlitzdüsenbeschichtung, Streichen oder Sprühen, können ebenso verwendet werden.

Die Schichtdicke, das heißt die Trockenschichtdicke der Anodenbeschichtung ist bevorzugt 2 $\mu$m bis 500 $\mu$m, besonders bevorzugt von 10 $\mu$m bis 300 $\mu$m.

Das Anodenmaterial wird im Allgemeinen bis zur Gewichtskonstanz getrocknet. Die Trocknungstemperatur liegt bevorzugt zwischen 20°C und 300°C, besonders bevorzugt zwischen 50°C und 150°C.

Eine Lithiumionen-Batterie umfasst im Allgemeinen eine erste Elektrode als Kathode, eine zweite Elektrode als Anode, eine zwischen beiden Elektroden angeordnete Membran als Separator, zwei elektrisch leitende Anschlüsse an den Elektroden, ein die genannten Teile aufnehmendes Gehäuse sowie einen Lithiumionen enthaltenden Elektrolyten, mit dem der Separator und die beiden Elektroden getränkt sind, wobei ein Teil der zweiten Elektrode das erfindungsgemäße Anodenmaterial enthält.

Alle zur Herstellung der erfindungsgemäßen Lithiumionen-Batterie, wie oben beschrieben, benutzten Stoffe und Materialien sind bekannt. Die Herstellung der Teile der erfindungsgemäßen Batterie und ihre Zusammenfügung zur erfindungsgemäßen Batterie kann nach den auf dem Gebiet der Batterieherstellung bekannten Verfahren erfolgen, wie beispielsweise in der Patentanmeldung mit der Anmeldenummer DE102015215415.7 beschrieben.

Überraschenderweise sind die erfindungsgemäß modifizierten Siliziumpartikel in Wasser, insbesondere in wässrigen Tintenformulierungen für Anoden von Lithiumionen-Batterien, in besonderem Maße stabil und neigen unter solchen Bedingungen wenig oder gar nicht zur Wasserstoffbildung. Dies ermöglicht eine Verarbeitung ohne ein Aufschäumen der wässrigen Tintenformulierung und die Herstellung von besonders homogenen bzw. Gasblasenfreien Anoden. Das im erfindungsgemäßen Verfahren als Edukt eingesetzte Silizium generiert dagegen in Wasser große Mengen Wasserstoff.

Auch der Umstand, dass die erfindungsgemäßen, modifizierten Siliciumpartikel in nicht-aggregierter Form vorliegen, trägt dazu bei, dass homogene Anodenbeschichtungen erhalten werden können. Denn in Aggregaten bilden mehrere oder gar eine Vielzahl von Siliziumpartikel Klümpchen, was einer möglichst homogenen Verteilung der einzelnen Siliziumpartikel in den Anodentinten beziehungsweise in den Anodenbeschichtungen zuwiderläuft. Zudem zeigen Anoden mit nicht-aggregierten Siliziumpartikeln eine bessere elektrochemische Performance. Eine weitere Verbesserung der Zyklenstabilität der Lithiumionen-Batterien kann erreicht werden, wenn die Batterien unter Teilbeladung betrieben werden, wie beschrieben in der Patentanmeldung mit der Anmeldenummer DE102015215415.7.

Die erfindungsgemäße Reduktion der Wasserstoffbildung kann überraschenderweise auch mit erfindungsgemäßen Siliziumpartikeln erreicht werden, die in nur geringem Maße oxidiert sind und damit nur sehr dünne Oxidschichten tragen. Siliziumpartikel mit geringerem SiOx-Anteil haben zwangsläufig einen höheren Silizium-Anteil und damit auch eine größere Speicherkapazität für Lithiumionen und ergeben damit Lithiumionen-Batterien mit höheren Energiedichten. Hierzu tragen auch die bevorzugten Partikelgrößen der erfindungsgemäßen Siliziumpartikel vorteilhaft bei. Siliziumpartikel mit erfindungsgemäßen Partikelgrößen zeigen zudem in Anodentinten ein vorteilhaftes Rheologieverhalten und damit bessere Verarbeitungseigenschaften als Siliziumpartikel mit kleineren Partikelgrößen, die mehr zum Verdicken der Anodentinten neigen. Es sind daher Elektrodentinten mit höheren Feststoffgehalten zugänglich, was den Aufwand der Trocknung der Elektrodenbeschichtung reduziert und zu einer Ressourcenschonung beiträgt.

Die nachfolgenden Beispiele dienen zur weiteren Erläuterung der Erfindung:

Bestimmung der Partikelgrößen:

Die Messung der Partikelverteilung wurde durch statische Laserstreuung unter Anwendung des Mie-Modells mit einem Horiba LA 950 in einer stark verdünnten Suspension in Wasser oder Isopropanol durchgeführt. Die angegebenen mittleren Partikelgrößen sind volumengewichtet.

Bestimmung des Sauerstoffgehalts (O-Gehalt):

Die Bestimmung des Sauerstoffgehalts wurde an einem Leco TCH-600 Analysator durchgeführt. Die Analyse erfolgte über das Aufschmelzen der Proben in Graphittiegeln unter Inertgasatmosphäre. Detektiert wurde über Infrarotdetektion (drei Messzellen).

Bestimmung der mittleren Siliziumoxid-Schichtdicke $d(SiO_2)$:

Die Bestimmung der mittleren Siliziumoxid-Schichtdicke $d(SiO_2)$ erfolgte für die modifizierten Siliziumpartikel nach folgender Formel:

$$d(SiO_2) \;=\; \frac{1}{2} * d_{50}(Si) * \left( 1 - \sqrt[3]{1 - \left([O - Gehalt] * \frac{M(SiO_2)}{M(O_2)}\right)} \right)$$

In die Formel fließen folgende Größen ein:

$d_{50}(Si)$ :

$d_{50}$-Wert für die volumengewichtete Partikelgrößenverteilung der modifizierten Siliziumpartikel, bestimmt wie weiter oben unter der Überschrift "Bestimmung der Partikelgrößen" angegeben;

O-Gehalt:

Sauerstoffgehalt der modifizierten Siliziumpartikel, bestimmt wie weiter oben angegeben;
$M(SiO_2)$: molare Masse von Siliziumdioxid ($SiO_2$): 60,084 g/mol;
$M(O_2)$: molare Masse von Sauerstoff ($O_2$): 31,998 g/mol.

Die Dichten von Silizium und Siliziumdioxid können bei dieser Bestimmung vernachlässigt werden, da diese für beide Spezies identische oder annähernd identische Werte annehmen.

Bestimmung der Wasserstoff-Entwicklung ($H_2$-Entwicklung) durch GC Messung (Headspace):

Es wurden 50 mg (für Bestimmung bei 80°C) oder 100 mg (für Bestimmung bei 40°C) der Probe in ein GC-Headspace Gläschen (22 ml) eingewogen und mit 5 ml eines wässrigen Li-Acetat Puffers (pH 7; 0,1 M) versetzt, das Gläschen verschlossen und unter Rühren für 60 Minuten bei 40°C gehalten bzw. für 30 Minuten in einem Aluminiumblock auf 80°C erhitzt.
Die Temperatur, an welcher die Bestimmung der Wasserstoff-Entwicklung durchgeführt wurde, ist bei den jeweiligen Experimenten angegeben.
Bei der Messung der Wasserstoffentwicklung an wässrigen Anodentinten wurden 5 g bzw. 15 g der frisch hergestellten Anodentinte in ein GC-Headspace Gläschen gegeben und bei Raumtemperatur für die angegebene Dauer gelagert und anschließend der $H_2$-Gehalt in der Gasphase bestimmt.
Die Bestimmung des Wasserstoffgehalts in der Gasphase wurde mittels GC-Messung durchgeführt. Detektiert wurde über Wärmeleitfähigkeitsdetektion. Die Angabe des Wasserstoffanteils erfolgte in Volumenprozent der Gasphase. Weitere detektierte Gase waren Sauerstoff, Stickstoff und Argon.

Beispiel 1:

Herstellung von **Si-Partikel A (nicht erfindungsgemäß):**

Die Si-Partikel A wurden nach dem Stand der Technik durch Mahlung eines groben Si-Splitts aus der Produktion von Solarsilizium in einer Fließbettstrahlmühle (Netzsch-Condux CGS16 mit 90 m$^3$/h Stickstoff bei 7 bar als Mahlgas) hergestellt. Die erhaltenen Partikel wurden unter Inertgas abgefüllt und so gelagert. Nach Entnahme der Partikel an Luft wurden die in Tabelle 1 angegebenen analytischen Daten erhalten.

Herstellung der **Si-Partikel B (erfindungsgemäß):**

Si-Partikel A (151,90 g) wurden in einer Glasschale in einem Trockenschrank der Firma Heraeus, Modell T6060, für 6 h bei 80°C an Luft erhitzt. Die so erhaltenen, modifizierten Silizium-Partikel B wurden nach Abkühlen auf Raumtemperatur entnommen, rückgewogen (152,10 g) und analytisch untersucht.

Die Stabilität der Silizium-Partikel in Wasser wurde mittels GC Messung untersucht, wie unter der Überschrift "Wasserstoff-Entwicklung ($H_2$-Entwicklung)" angegeben. Die erhaltenen Ergebnisse sind Tabelle 1 gezeigt.

Herstellung der **Si-Partikel C (erfindungsgemäß):**

Silizium-Partikel A (829,2 g, vgl. Tabelle 1) wurden in eine Abdampfschale eingelegt und in einen Kalzinierofen der Firma ThermConcept, Modell KK480 gegeben. Der Innenraum des Ofens wurde für eine Dauer von 6 h auf 600°C erhitzt, wobei ein Luftzutritt zu der Si-Schüttung gewährleistet war.

Die so erhaltenen, modifizierten **Silizium-Partikel** C wurden nach Abkühlen auf Raumtemperatur entnommen, rückgewogen (832,8 g) und analytisch untersucht. Die Stabilität der Silizium-Partikel in Wasser wurde mittels GC Messung untersucht, wie unter der Überschrift "Wasserstoff-Entwicklung ($H_2$-Entwicklung)" angegeben. Die erhaltenen Ergebnisse sind Tabelle 1 gezeigt.

Tabelle 1: Analytische Daten der Si-Partikel sowie Reaktionsbedingungen der Oxidation:

| | Si-Partikel A (Vergleich) | Si-Partikel B | Si-Partikel C |
|---|---|---|---|
| Temperatur | - | 80°C | 600°C |
| Dauer | - | 6 h | 6 h |
| $d_{10}$ | 2,4 μm | 2,3 μm | 2,3 pm |
| $d_{50}$ | 4,7 μm | 4,7 μm | 4,8 μm |
| $d_{90}$ | 7,9 μm | 7,9 μm | 7,9 μm |
| O-Gehalt | 0,16 % | 0,22 % | 0,72% |
| $d(SiO_2)$ | 2,2 nm | 3,1 nm | 10,6 nm |
| $H_2$-Entwicklung (40 °C) | 0,29 Vol.-% | 0,07 Vol.-% | 0,00 Vol.-% |
| $H_2$-Entwicklung (80°C) | 0,67 Vol.-% | 0,26 Vol.-% | 0,00 Vol.-% |
| $d_{50}$: Durchmesser-Perzentile $d_{50}$ der volumengewichteten Partikelgrößenverteilungen der Partikel A, B beziehungsweise C; $d(SiO_2)$: berechnete, mittlere Siliziumoxid-Schichtdicke auf der Oberfläche der Si-Partikel. | | | |

Die Edukt-Si-Partikel zeigen bereits bei 40°C eine signifikante $H_2$-Entwicklung. Die erfindungsgemäßen Produkte weisen bei 40°C nur eine sehr geringe bzw. keine $H_2$-Entwicklung auf.

Beispiel 2: Herstellung von wässrigen Tintenformulierungen: 127,5 g der jeweiligen Silizium Partikel wurden mit 45,5 g Graphit (KS6L der Firma Imerys) und mit 100 g einer wässrigen LiPAA-Binderlösung (hergestellt aus LiOH und Polyacrylsäure, m.w. 450k, bezogen von Sigma-Aldrich, Art.Nr. 181285) (4 Gew.-%, pH 6,9) mit einem Planetenmischer (Typ LPV 1 G2 der Firma PC Laborsystem) vermischt. Nach 60 Minuten Rührzeit bei 50 rpm wurden weitere 119,5 g der oben genannten LiPAA-Binderlösung zugegeben und für weitere 60 Minuten bei 100 rpm gerührt. Zur Untersuchung auf $H_2$-Entwicklung wurden von der jeweiligen Tinte 5 g (Si-Partikel A) oder 15 g (Si-Partikel B / C) in ein Headspace-Gläschen (20 ml Gesamtvolumen) abgefüllt und bei Raumtemperatur gelagert. Nach den in Tabelle 2 angegeben Zeiten wurde der Gasraum auf seine Zusammensetzung untersucht. Die analytischen Daten sind in Tabelle 2 zusammengefasst.

Tabelle 2: Wasserstoff-Entwicklung der wässrigen Tintenformulierungen:

|  | Tinte A (Vergleich) | **Tinte** B (erfindungsgemäß) | **Tinte** C (erfindungsgemäß) |
|---|---|---|---|
| Si-Partikel | **Si-Partikel** A (Vergleich) | **Si-Partikel** B (erfindungsgemäß) | **Si-Partikel** C (erfindungsgemäß) |
| $H_2$-Entwicklung | 48 Vol.-% (1 Tag) (5 g Tinte) (17 ml Gasraum) | 0,00 Vol.-% (1 Tag) (5 g Tinte) (17 ml Gasraum) | 0,00 Vol.% (7 Tage) (15 g Tinte) (7 ml Gasraum) |

Die Vergleichs-Tinte enthaltend Siliziumpartikel A zeigte ein starkes Aufschäumen während der Verarbeitung mit dem Planetenmischer sowie weiterhin eine starke $H_2$-Entwicklung, auch nach kurzer Standzeit, währenddessen die erfindungsgemäßen Tinten enthaltend die modifizierten Siliziumpartikel B oder C keine $H_2$-Entwicklung zeigten, auch nach ausgedehnten Standzeiten.

Beide erfindungsgemäßen Tintenformulierungen lassen sich zu homogenen Elektrodenbeschichtungen verarbeiten.

Die Elektrodenbeschichtung mit Si-Partikel A neigt aufgrund der starken Wasserstoffentwicklung zum Aufplatzen der Beschichtung und dadurch zur inhomogenen Beschichtung.

**Patentansprüche**

1. Verfahren zur Herstellung von nicht-aggregierten, modifizierten Siliziumpartikeln, indem nicht-aggregierte Siliziumpartikel, die volumengewichtete Partikelgrößenverteilungen mit Durchmesser-Perzentilen $d_{50}$ von 3,0 bis 7,0 $\mu$m aufweisen,

    bei 80°C bis 900°C mit einem Sauerstoff-haltigen Gas behandelt werden,
    mit der Maßgabe, dass der Sauerstoffgehalt der nicht-aggregierten, modifizierten Siliziumpartikel um 0,05 bis 0,6 Gew.-% größer ist als der Sauerstoffgehalt der als Edukt eingesetzten nicht-aggregierten Siliziumpartikel, je bezogen auf das Gesamtgewicht der Siliziumpartikel.

2. Verfahren zur Herstellung von nicht-aggregierten, modifizierten Siliziumpartikeln gemäß Anspruch 1, **dadurch gekennzeichnet, dass** das Sauerstoff-haltige Gas 1 bis 100 Vol.-%, insbesondere ≥ 5 Vol.-% Sauerstoff enthält, bezogen auf das Gesamtvolumen des Sauerstoff-haltigen Gases.

3. Verfahren zur Herstellung von nicht-aggregierten, modifizierten Siliziumpartikeln gemäß Anspruch 1 oder 2, **dadurch gekennzeichnet, dass** das Behandeln mit einem Sauerstoff-haltigen Gas bei 400°C bis 800°C erfolgt.

4. Verfahren zur Herstellung von nicht-aggregierten, modifizierten Siliziumpartikeln gemäß Anspruch 1 oder 2, **dadurch gekennzeichnet, dass** das Behandeln mit einem Sauerstoff-haltigen Gas bei 80°C bis 400°C erfolgt.

5. Verfahren zur Herstellung von nicht-aggregierten, modifizierten Siliziumpartikeln gemäß Anspruch 1 bis 4, **dadurch gekennzeichnet, dass** die als Edukt eingesetzten nicht-aggregierten Siliziumpartikel ≤ 2,0 Gew.-% Sauerstoff enthalten, bezogen auf das Gesamtgewicht der als Edukt eingesetzten nicht-aggregierten Siliziumpartikel.

6. Verfahren zur Herstellung von nicht-aggregierten, modifizierten Siliziumpartikeln gemäß Anspruch 1 bis 4, **dadurch gekennzeichnet, dass** die nicht-aggregierten, modifizierten Siliziumpartikel 0,1 bis 3,0 Gew.-% Sauerstoff enthalten, bezogen auf das Gesamtgewicht der nicht-aggregierten, modifizierten Siliziumpartikel.

7. Verfahren zur Herstellung von nicht-aggregierten, modifizierten Siliziumpartikeln gemäß Anspruch 1 bis 6, **dadurch gekennzeichnet, dass** die als Edukt eingesetzten nicht-aggregierten Siliziumpartikel nicht-agglomeriert sind.

**8.** Verfahren zur Herstellung von nicht-aggregierten, modifizierten Siliziumpartikeln gemäß Anspruch 1 bis 7, **dadurch gekennzeichnet, dass** nicht-aggregierte, modifizierte Siliziumpartikel an der Oberfläche eine Siliziumoxid-Schicht mit einer mittleren Schichtdicke von 2 bis 50 nm haben.

**9.** Verfahren zur Herstellung von nicht-aggregierten, modifizierten Siliziumpartikeln gemäß Anspruch 1 bis 8, **dadurch gekennzeichnet, dass** die nicht-aggregierten, modifizierten Siliziumpartikel volumengewichtete Partikelgrößenverteilungen mit Durchmesser-Perzentilen $d_{50}$ von 3,0 $\mu$m bis 7,0 $\mu$m aufweisen.

**10.** Verfahren zur Herstellung von nicht-aggregierten, modifizierten Siliziumpartikeln gemäß Anspruch 1 bis 9, **dadurch gekennzeichnet, dass**

die als Edukt eingesetzten nicht-aggregierten Siliziumpartikel oder
die nicht-aggregierten, modifizierten Siliziumpartikel BET-Oberflächen von 0,2 bis 8,0 m$^2$/g haben (Bestimmungsmethode: gemäß DIN 66131 mit Stickstoff).

**11.** Nicht-aggregierte, modifizierte Siliziumpartikel erhältlich nach den Verfahren gemäß Anspruch 1 bis 10.

**12.** Nicht-aggregierte, modifizierte Siliziumpartikel gemäß Anspruch 11, **dadurch gekennzeichnet, dass** die nicht-aggregierten, modifizierten Siliziumpartikel 0,2 bis 1,5 Gew.-% Sauerstoff enthalten, bezogen auf das Gesamtgewicht der nicht-aggregierten, modifizierten Silizium-partikel.

**13.** Nicht-aggregierte, modifizierte Siliziumpartikel gemäß Anspruch 11 oder 12, **dadurch gekennzeichnet, dass** die nicht-aggregierten, modifizierten Siliziumpartikel volumengewichtete Partikelgrößenverteilungen mit Durchmesser-Perzentilen $d_{90}$ von 2,0 bis 20,0 $\mu$m aufweisen.

**14.** Verfahren zur Herstellung von wässrigen Tintenformulierungen, **dadurch gekennzeichnet, dass** Verfahrensprodukte gemäß Anspruch 1 bis 10 und ein oder mehrere Bindemittel mit Wasser gemischt werden.

**15.** Verwendung der Verfahrensprodukte gemäß Anspruch 1 bis 10 zur Herstellung von Anoden für Lithiumionen-Batterien.

**Claims**

**1.** Process for producing nonaggregated, modified silicon particles by treating nonaggregated silicon particles having volume-weighted particle size distributions having diameter percentiles $d_{50}$ of 3.0 $\mu$m to 7.0 $\mu$m with an oxygen-containing gas at 80°C to 900°C, with the proviso that the oxygen content of the nonaggregated, modified silicon particles is 0.05% to 0.6% by weight greater than the oxygen content of the nonaggregated silicon particles used as reactant in each case based on the total weight of the silicon particles.

**2.** Process for producing nonaggregated, modified silicon particles according to Claim 1, **characterized in that** the oxygen-containing gas contains 1 to 100 vol%, in particular $\geq$ 5 vol%, of oxygen based on the total volume of the oxygen-containing gas.

**3.** Process for producing nonaggregated, modified silicon particles according to Claim 1 or 2, **characterized in that** the treatment with an oxygen-containing gas is carried out at 400°C to 800°C.

**4.** Process for producing nonaggregated, modified silicon particles according to Claim 1 or 2, **characterized in that** the treatment with an oxygen-containing gas is carried out at 80°C to 400°C.

**5.** Process for producing nonaggregated, modified silicon particles according to Claims 1 to 4, **characterized in that** the nonaggregated silicon particles used as reactant contain $\leq$ 2.0% by weight of oxygen based on the total weight of the nonaggregated silicon particles used as reactant.

**6.** Process for producing nonaggregated, modified silicon particles according to Claims 1 to 4, **characterized in that** the nonaggregated, modified silicon particles contain 0.1% to 3.0% by weight of oxygen based on the total weight of the nonaggregated, modified silicon particles.

**7.** Process for producing nonaggregated, modified silicon particles according to Claims 1 to 6, **characterized in that** the nonaggregated silicon particles used as reactant are nonagglomerated.

**8.** Process for producing nonaggregated, modified silicon particles according to Claims 1 to 7, **characterized in that** at the surface nonaggregated, modified silicon particles have a silicon oxide layer having an average layer thickness of 2 to 50 nm.

**9.** Process for producing nonaggregated, modified silicon particles according to Claims 1 to 8, **characterized in that** the nonaggregated, modified silicon particles have volume-weighted particle size distributions having diameter percentiles $d_{50}$ of 3.0 $\mu$m to 7.0 $\mu$m.

**10.** Process for producing nonaggregated, modified silicon particles according to Claims 1 to 9, **characterized in that** the nonaggregated silicon particles used as reactant or
the nonaggregated, modified silicon particles have BET surface areas of 0.2 to 8.0 $m^2/g$ (method of determination: according to DIN 66131 with nitrogen).

**11.** Nonaggregated, modified silicon particle obtainable by the processes according to Claims 1 to 10.

**12.** Nonaggregated, modified silicon particle according to Claim 11, **characterized in that** the nonaggregated, modified silicon particle contains 0.2% to 1.5% by weight of oxygen based on the total weight of the nonaggregated, modified silicon particle.

**13.** Nonaggregated, modified silicon particle according to Claim 11 or 12, **characterized in that** the nonaggregated, modified silicon particles have volume-weighted particle size distributions having diameter percentiles $d_{90}$ of 2.0 $\mu$m to 20.0 $\mu$m.

**14.** Process for producing aqueous ink formulations, **characterized in that** process products according to Claims 1 to 10 and one or more binders are mixed with water.

**15.** The use of the process products according to Claims 1 to 10 for producing anodes for lithium-ion batteries.


**Revendications**

**1.** Procédé pour la production de particules de silicium non agrégées, modifiées, par traitement de particules de silicium non agrégées qui présentent des distributions pondérées en volume de tailles de particules avec des centiles de diamètres $d_{50}$ de 3,0 à 7,0 $\mu$m,

par un gaz contenant de l'oxygène, à une température de 80 °C à 900 °C,
étant entendu que la teneur en oxygène des particules de silicium non agrégées, modifiées, est supérieure de 0,05 à 0,6 % en poids à la teneur en oxygène des particules de silicium non agrégées utilisées comme produit de départ, par rapport au poids total des particules de silicium.

**2.** Procédé pour la production de particules de silicium non agrégées, modifiées, selon la revendication 1, **caractérisé en ce que** le gaz contenant de l'oxygène contient 1 à 100 % en volume, en particulier $\geq$ 5 % en volume d'oxygène, par rapport au volume total du gaz contenant de l'oxygène.

**3.** Procédé pour la production de particules de silicium non agrégées, modifiées, selon la revendication 1 ou 2, **caractérisé en ce que** le traitement par un gaz contenant de l'oxygène s'effectue à une température de 400 °C à 800 °C.

**4.** Procédé pour la production de particules de silicium non agrégées, modifiées, selon la revendication 1 ou 2, **caractérisé en ce que** le traitement par un gaz contenant de l'oxygène s'effectue à une température de 80 °C à 400 °C.

**5.** Procédé pour la production de particules de silicium non agrégées, modifiées, selon l'une quelconque des revendications 1 à 4, **caractérisé en ce que** les particules de silicium non agrégées, utilisées comme produit de départ, contiennent $\leq$ 2,0 % en poids d'oxygène, par rapport au poids total des particules de silicium non agrégées, utilisées comme produit de départ.

6. Procédé pour la production de particules de silicium non agrégées, modifiées, selon l'une quelconque des revendications 1 à 4, **caractérisé en ce que** les particules de silicium non agrégées, modifiées, contiennent 0,1 à 3,0 % en poids d'oxygène, par rapport au poids total des particules de silicium non agrégées, modifiées.

7. Procédé pour la production de particules de silicium non agrégées, modifiées, selon l'une quelconque des revendications 1 à 6, **caractérisé en ce que**
les particules de silicium non agrégées, utilisées comme produit de départ, ne sont pas agglomérées.

8. Procédé pour la production de particules de silicium non agrégées, modifiées, selon l'une quelconque des revendications 1 à 7, **caractérisé en ce que** les particules de silicium non agrégées, modifiées, comportent sur la surface une couche d'oxyde de silicium ayant une épaisseur moyenne de couche de 2 à 50 nm.

9. Procédé pour la production de particules de silicium non agrégées, modifiées, selon l'une quelconque des revendications 1 à 8, **caractérisé en ce que** les particules de silicium non agrégées, modifiées, présentent des distributions pondérées en volume de tailles de particules avec des centiles de diamètres $d_{50}$ de 3,0 $\mu$m à 7,0 $\mu$m,

10. Procédé pour la production de particules de silicium non agrégées, modifiées, selon l'une quelconque des revendications 1 à 9, **caractérisé en ce que**

les particules de silicium non agrégées, utilisées comme produit de départ, ou
les particules de silicium non agrégées, modifiées, ont des surfaces BET de 0,2 à 8,0 m$^2$/g (méthode de détermination : selon DIN 66131 avec de l'azote).

11. Particules de silicium non agrégées, modifiées, pouvant être obtenues conformément au procédé selon l'une quelconque des revendications 1 à 10.

12. Particules de silicium non agrégées, modifiées, selon la revendication 11, **caractérisées en ce que** les particules de silicium non agrégées, modifiées, contiennent 0,2 à 1,5 % en poids d'oxygène, par rapport au poids total des particules de silicium non agrégées, modifiées.

13. Particules de silicium non agrégées, modifiées, selon la revendication 11 ou 12, **caractérisées en ce que**
les particules de silicium non agrégées, modifiées, présentent des distributions pondérées en volume de tailles de particules avec des centiles de diamètres $d_{90}$ de 2,0 à 20,0 $\mu$m.

14. Procédé pour la fabrication de formulations d'encres à base d'eau, **caractérisé en ce que** des produits du procédé selon l'une quelconque des revendications 1 à 10 et un ou plusieurs liants sont mélangés avec de l'eau.

15. Utilisation des produits du procédé selon l'une quelconque des revendications 1 à 10 pour la fabrication d'anodes pour batteries lithium-ion.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1313158 A
- EP 1102340 A
- JP 2011065796 B
- WO 17148872 A
- DE 102015215415

**In der Beschreibung aufgeführte Nicht-Patentliteratur**

- **TOUIDJINE.** *Journal of The Electrochemical Society,* 2015, vol. 162, A1466-A1475
- **TICHAPONDWA.** *Propellants, Explosives, Pyrotechnics,* 2013, vol. 38, 48-55